# EUROPEAN PATENT SPECIFICATION

(11) **EP 2 041 541 B1**
(45) Date of publication and mention of the grant of the patent: **14.09.2011**
(21) Application number: 07768446.2
(22) Date of filing: 12.07.2007
(51) Int. Cl.: G01M 3/04, G01N 33/32, B05B 5/16, B05B 9/047, B05B 12/14

(54) **LEAKAGE DETECTION DEVICE FOR COATING MATERIAL AND COATING MATERIAL FILLING SYSTEM**
LECKDETEKTIONSVORRICHTUNG FÜR BESCHICHTUNGSMATERIAL UND FÜLLSYSTEM FÜR BESCHICHTUNGSMATERIAL
DISPOSITIF DE DETECTION DE FUITE POUR MATERIAU DE REVETEMENT ET SYSTEME DE REMPLISSAGE DE MATERIAU DE REVETEMENT

(30) Priority: 14.07.2006 JP 2006194564
(43) Date of publication of application: 01.04.2009
(73) Proprietor: Trinity Industrial Corporation, Toyota-shi, Aichi 471-0855 (JP); TOYOTA JIDOSHA KABUSHIKI KAISHA, Aichi-ken, 471-8571 (JP)
(72) Inventor: MORI, Takanobu, Aichi 471-8571 (JP); ACHIWA, Noriyuki, Toyota-shi, Aichi 471-0855 (JP)
(74) Representative: Lippert, Stachow & Partner
(86) International application number: PCT/JP2007/064295
(87) International publication number: WO 2008/007813

(56) References cited:
- EP-A- 1 252 936
- WO-A-2006/135066
- JP-A- 2002 310 844
- JP-A- 2003 236 419

## Description

### [Technical Field]

The present invention concerns a coating material leakage detection device for detecting of a coating material leakage from a coating material chamber to a hydraulic fluid chamber in a coating material cartridge, and a coating material filling system having the coating material leakage detection device.

### [Background Art]

Heretofore, in a coating system for coating articles to be coated such as automobile bodies, since coating at high quality is required, an electrostatic coating machine excellent in the deposition efficiency and the smoothness of coating layer has been used.

In the electrostatic coating machine, a rotary atomizing head for atomizing an aqueous coating material for electrostatic coating is provided, and by application of high voltage to the rotary atomizing head, coating material particles atomized in the rotary atomizing head are charged and electrostatic coating is conducted.
The electrostatic coating machine includes a coating machine in which a coating material cartridge is mounted to a coating machine main body and a predetermined amount of a liquid for pumping a coating material (hereinafter referred to as a hydraulic fluid) is filled thereby pumping out the coating material in the coating material cartridge and supplying the same to the rotary atomizing head to conduct coating (refer, for example, to Patent Citation 1).
The coating material cartridge has a coating material chamber and a hydraulic fluid chamber partitioned from each other by way of a partition body, in which a coating material in the coating material chamber is pumping out along with movement of a piston after filling the hydraulic fluid.

By the way, since an electric current could leak by way of a coating material flowing through a coating material supply system, an insulation countermeasure for preventing this is necessary. As the countermeasure, there has been proposed, for example, to use an insulating solution (organic solvent or the like) as the hydraulic fluid.
The hydraulic fluid is a fluid having a specific gravity as low as from 0.7 to 0.9, and with a reduced weight compared with an aqueous coating material for use in electrostatic coating having a specific gravity from 1.1 to 1.3.

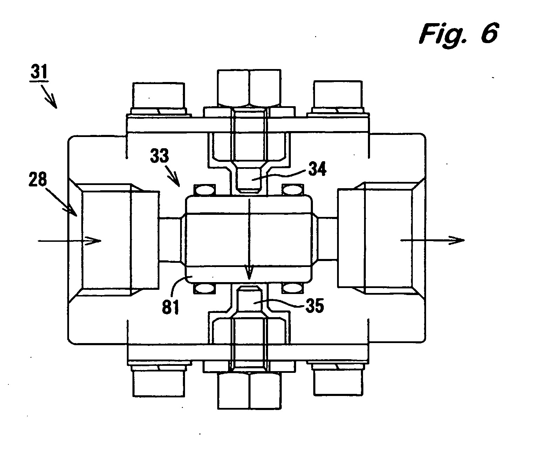

Further, as another insulation countermeasure, it has been proposed to mount a coating material cartridge having a coating material bag filled with a coating material to a coating machine main body instead of an existent coating material cartridge.
By the use of the coating material cartridge, since coating material leakage from the inside of the coating material chamber (inside of the coating material bag) to the hydraulic fluid chamber is prevented completely, current leakage can be prevented reliably.
In this case, the coating material is supplied to a rotary atomizing head by filling the hydraulic fluid into the hydraulic fluid chamber and pumping out the coating material in the coating material bag.
[Patent Citation 1] JP-A No. 2000-176328 (refer to Fig. 6. etc.)
Document EP1252936 discloses a dosing cartridge with a coating material leakage detection arrangement.

### [Disclosure of Invention]

### [Technical Problem]

However, in a case where the coating material bag is broken by some or other reasons, the coating material in the coating material bag is leaked all at once to the hydraulic fluid chamber.
Even for the coating material cartridge described in the Patent Citation 1, in a case where a piston is tilted and a seal ring formed to the outer peripheral portion thereof is detached for instance, the coating material in the coating material chamber could leak all at once to the hydraulic fluid chamber.
Since the hydraulic fluid in the hydraulic fluid chamber is recovered to a hydraulic fluid storing vessel and re-used in a case where the coating material cartridge is attached to a coating material filling device, if the coating material should leak at once in this state, a contaminated hydraulic fluid flows into a recovery path of the hydraulic fluid to contaminate the entire hydraulic fluid.
Particularly, in a case of a constitution that the hydraulic fluid is supplied from the hydraulic fluid storing vessel to a plurality of coating material filling devices or a plurality of coating machines, when the coating material bag is broken in one coating material cartridge, the hydraulic fluid mixed with a coating material flows to the hydraulic fluid storing vessel and is supplied thereafter to all of the coating material filling devices and all of the coating machines. In such a case, it is necessary to conduct recovery operation (exchange, cleaning, etc. of hydraulic fluid) while stopping the production line for a long time.

Therefore, it is necessary to detect the leakage of the coating material into the hydraulic fluid chamber.
In a case where the coating material is filled or discharged without recognizing the breakage of the coating material bag (or detachment of a sealing ring of a piston), since the coating material mixed with the hydraulic fluid is sprayed to an article to be coated (hereinafter referred to as a work), the coating quality (color, luster, surface state, weather proofness) of the work is lowered to result in defective products.
Accordingly, enormous losses or claims are caused if the abnormality described above is not found at once.

Particularly, in a case where the hydraulic fluid is an organic solvent, since the specific gravity of the aqueous coating material is higher than that of the hydraulic fluid, it stagnates at the bottom of the coating material cartridge. Accordingly, even when the coating material bag is broken (or the seal ring of the piston is detached) and the coating material leaks to the hydraulic fluid chamber, it is very difficult to perceive the leaked coating material.
That is, detection of the coating material leakage is difficult unless the coating material leaks and is discharged in a great amount to the outside from the entrance/exit port in the coating material cartridge.

The present invention has been achieved in view of the subject described above and the object thereof is to provide a coating material leakage detection device capable of finding contamination of the hydraulic fluid at an early stage and, thus, capable of preventing the deterioration of the coating quality of a work, and a coating material filling system.

### [Technical Solution]

For solving the foregoing subject, the invention described in claim 1 has a feature in a coating material leakage detection device having a coating material chamber and a hydraulic fluid chamber partitioned from each other by way of a deformable or displaceable partition body, for detecting coating material leakage from the coating material chamber to the hydraulic fluid chamber in a coating material cartridge mounted detachably to a coating material filling device, characterized by a provision of contaminant detection means for detecting a contaminant in the hydraulic fluid caused by coating material leakage.

Therefore, according to the invention described in claim 1, even when coating material leakage should occur from the coating material chamber to the hydraulic fluid chamber, the contaminant detection means detects the contaminant in the hydraulic fluid attributable to the coating material leakage.
Accordingly, contamination of the hydraulic fluid due to the mixing of the coating material can be found at an early stage.
Further, abnormality of the partition body can be recognized when the contaminant detection means detects the contaminant in the hydraulic fluid and, in this case, it can be estimated that the hydraulic fluid may possibly be mixed to the coating material.
Accordingly, it is possible to prevent coating of a work by using a coating material mixed with the hydraulic fluid, and prevent degradation of the coating quality of the work attributable thereto.

The partition body disposed deformably in the cartridge main body includes, for example, diaphragms, bellows, and coating material bags.
Further, the partition body disposed displaceably in the cartridge main body includes, for example, a piston.
For reliably preventing the coating material leakage from the coating material chamber to the hydraulic fluid chamber, it is preferred to use a deformable partition body such as diaphragms, bellows or coating material bags.
Particularly, it is preferred to use a coating material bag showing a larger volumic change than the diaphragm and having a more simple structure than the bellows as the partition body.

Further, the contaminant detection means includes contactless contaminant detection means such as those comprising a light projector and a photodetector and adapted to detect a contaminant in the hydraulic fluid when reception of a light from the light projector becomes difficult at the photodetector, or those detecting the contaminant in the hydraulic fluid by using supersonic waves.
Further, the contaminant detection means includes contact type contaminant detection means such as those comprising a pair of electrodes for detecting the contaminant in the hydraulic fluid upon electric conduction between both of the electrodes by way of the hydraulic fluid.
However, the contact type contaminant detection means involves a possibility that both of the electrodes are not conducted electrically even when the contaminant is present in the hydraulic fluid.
Accordingly, it is preferred for the contaminant detection means to use the contactless contaminant detection means and, particularly, it is preferred to use those comprising a light projector and a photodetector which is at a reduced cost among the contactless contaminant detection means.

In the invention described above, it is preferred that the coating material is an aqueous coating material for electrostatic coating, and the hydraulic fluid is an insulative transparent oily liquid having a difference in the specific gravity relative to the coating material (claim 2).
With such a constitution, leakage of electric current by way of the coating material and the hydraulic fluid can be prevented. In this case, the hydraulic fluid includes transparent oily liquids comprising saturated hydrocarbons as the main ingredient such as saturated aliphatic hydrocarbons or naphthenic hydrocarbons.
Since the aliphatic hydrocarbons or naphthenic hydrocarbons have low solubility and less coating material coagulating property, they can be discharged easily from the coating material filling device to the coating material leakage detection device without coagulating the leaked coating material.

By the way, since the specific gravity of the coating material (aqueous coating material for electrostatic coating) is usually higher than the specific gravity of a hydraulic fluid (transparent oily liquid), in a case where the coating material leakage detection device has a bottomed container, the leaked coating material stagnates at the bottom of the bottomed container.
In this case, the coating material leakage detection device preferably has a bottomed container having a volume larger than the necessary amount of the coating material to be used for coating one work, the contaminant detection means comprising a light projector and a photodetector opposed to each other sandwiching the bottomed container therebetween at the outer periphery of the bottom thereof, an introduction pipe for introducing the hydraulic fluid into the bottomed container, and a discharge pipe for discharging the hydraulic fluid to the outside of the bottomed container (claim 3).
According to the constitution, since the hydraulic fluid introduced by way of the introduction pipe into the bottomed container stagnates at the bottom of the bottomed container, the coating material mixed to the hydraulic fluid is reliably settled at the bottom of the bottomed container.
Accordingly, since reception of a light from the light projector at the photodetector disposed to the outer periphery of the bottom of the bottomed container becomes difficult just upon contamination of the hydraulic fluid, contamination of the hydraulic fluid can be detected easily.
Further, since the bottomed container has a volume larger than the amount of the coating material to be used per one cycle, this lowers the possibility that the hydraulic fluid introduced into the bottomed container is discharged from the discharge pipe to the outside of the bottomed container with no stagnation.
Accordingly, even when the coating material should leak, since the contaminated hydraulic fluid stagnates in the bottomed container, contamination of the hydraulic fluid less prevails.
Further, by storing the hydraulic fluid in the bottomed container, air mixed to the hydraulic fluid can be released.

While the foregoings show a case where the specific gravity of the coating material is higher than the specific gravity of the hydraulic fluid, the specific gravity of the coating material is sometimes lower than the specific gravity of the hydraulic fluid as a special case.
In this case, the coating material leakage detection device preferably has a bottomed container having a volume larger than the necessary amount of the coating material to be used for coating one work, the contaminant detection means comprising a light projector and a photodetector opposed to each other sandwiching the bottomed container therebetween at the outer periphery of the upper portion thereof, an introduction pipe for introducing the hydraulic fluid into the bottomed container, and a discharge pipe for discharging the hydraulic fluid to the outside of the bottomed container (claim 4).
With the constitution described above, the hydraulic fluid introduced by way of the introduction pipe into the bottomed container reliably stagnate in the upper portion of the bottomed container.
Accordingly, since reception of a light from the light projector at the photodetector disposed to the outer periphery of the upper portion of the bottomed container becomes difficult just upon contamination of the hydraulic fluid, contamination of the hydraulic fluid can be detected easily.
Specific examples that the specific gravity of the coating material is lower than the specific gravity of the hydraulic fluid includes, for example, a case where the coating material is an aqueous base coating material for the top coating with the specific gravity of 1.1 or less, and the hydraulic fluid is ethylene glycol with a specific gravity of 1.134.

The invention described in claim 5 has a feature in a coating material filling system characterized by providing a coating material filling device having a cartridge attaching portion detachably attached with a coating material cartridge having a coating material chamber and a hydraulic fluid chamber partitioned from each other by way of a deformable or displaceable partition body, and having a coating material filling path disposed for introducing a coating material into the coating material chamber upon attachment of the coating material cartridge, a hydraulic fluid storing vessel for storing the hydraulic fluid, a hydraulic fluid return path for returning the hydraulic fluid discharged from the hydraulic fluid chamber by way of the coating material filling device to the hydraulic fluid storing vessel, and a coating material leakage detection device as described in any one of claims 1 to 4 disposed on the hydraulic fluid return path.

Therefore, according to the invention described in claim 5, even when coating material should leak from the coating material chamber to the hydraulic fluid chamber upon attachment of the coating material cartridge to the cartridge attaching portion of the coating material filling device, the contaminant detection means of the coating material leakage detection device detects the contaminant in the hydraulic fluid attributable to the coating material leakage.
Accordingly, since contamination of the hydraulic fluid can be found at an early stage, it is possible to prevent the contaminated hydraulic fluid from prevailing not only to the hydraulic fluid return pass or the coating material leakage detection device but also to the hydraulic fluid storing vessel or the like.
Further, since the contaminant detection means detects contaminants in the hydraulic fluid, abnormality of the partition body can be recognized and, in this case, it can be estimated that the hydraulic fluid could mix to the coating material.
Accordingly, it is possible to prevent coating of a work by using the coating material mixed with the hydraulic fluid and prevent degradation of the coating quality of the work attributable thereto.

In the invention described in claim 5, it is preferred that the coating material filling system further comprises an obstacle removing device disposed to the downstream of the coating material leakage detection device or the hydraulic fluid storing vessel on the hydraulic fluid return path for removing the coating material ingredients contained as obstacles in the hydraulic fluid by utilizing the difference of the specific gravity (Claim 6).
With the constitution described above, even when coating material should leak from the coating material chamber to the hydraulic fluid chamber, the hydraulic fluid removed with the coating material ingredients contained as the obstacle is returned to the hydraulic fluid storing vessel.
Accordingly, effects to other portions of the coating material filling system can be minimized.

### [Advantageous Effects]

As has been described above specifically, according to the invention described in claims 1 to 6, contamination of the hydraulic fluid can be found at an early stage and, thus, degradation of the coating quality of a work can be prevented.

### [Brief Description of Drawings]

[Fig. 1]

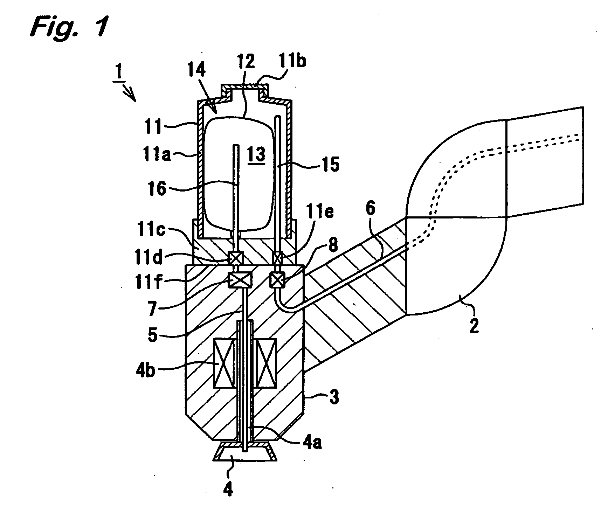

   Fig. 1 is a schematic cross sectional view showing a coating machine in this embodiment.
[Fig. 2]

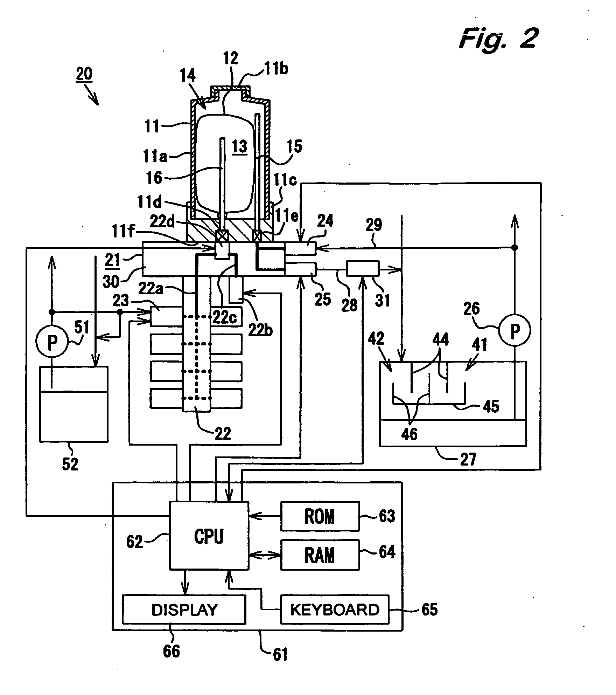

   Fig. 2 is a constitutional view showing a coating material filling system in this embodiment.
[Fig. 3]

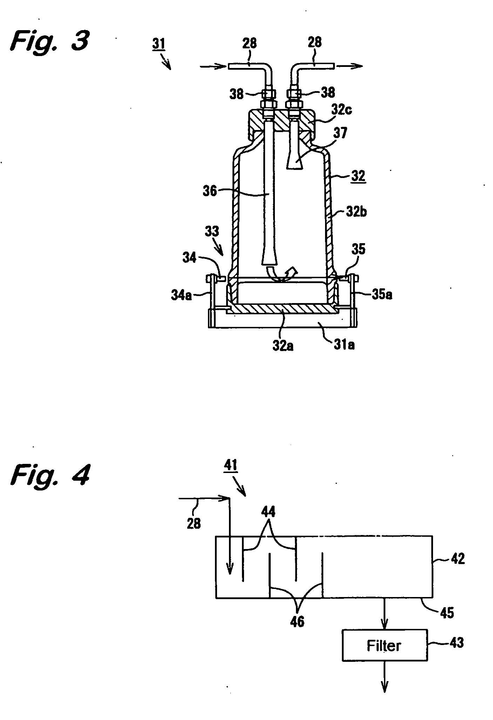

   Fig. 3 is a schematic cross sectional view showing a coating material leakage detection device.
[Fig. 4]
   Fig. 4 is a constitutional view showing an obstacle removing device.
[Fig. 5]

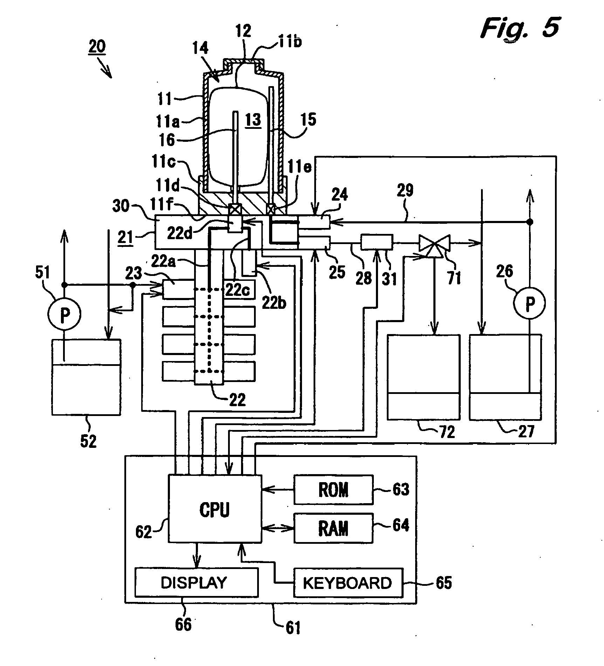

   Fig. 5 is a constitutional view showing a coating material filling system in another embodiment.
[Fig. 6]
   Fig. 6 is a constitutional view showing a coating material leakage detection device in another embodiment.

### [Explanation of Reference]

- 11: coating material cartridge
- 12: coating material bag as a partition body
- 13: coating material chamber
- 14: hydraulic fluid chamber
- 20: coating material filling system
- 21: coating material filling device
- 22a: coating material filling path
- 27: hydraulic fluid storing vessel
- 28: hydraulic fluid return pipeline as a hydraulic fluid return path
- 30: cartridge attaching portion
- 31: coating material leakage detection device
- 32: bottomed vessel
- 32a: bottom of bottomed vessel
- 33: contaminant detection means
- 34: light projector
- 35: photodetector
- 36: introduction pipe
- 37: discharge pipe
- 41: obstacle removing device

### [Best Mode for Carrying Out the Invention]

A preferred embodiment embodying the present invention is to be described with reference to the drawings.
At first, the constitution of a coating machine 1 is to be described. As shown in Fig. 1, the coating machine 1 is mounted to the top end of an arm 2 for a coating manipulator. At the front of a coating machine main body 3, a rotary atomizing head 4 is rotationally attached by way of a tubular rotary shaft 4a of an air motor 4b incorporated in the coating machine main body 3.
The rotary atomizing head 4 is adapted to be applied with a high voltage from a not illustrated high voltage generator.
That is, the coating machine 1 is an electrostatic coating machine for conducting coating in a state of charging a coating material negatively and grounding a work such as an automobile body to an earth.
Further, a coating material cartridge 11 is attached detachably to a mounting portion disposed at the back of the coating machine main body 3.
The coating material cartridge 11 is made of a transparent solvent resistant resin and comprises a main body 11a in a substantially cylindrical shape, a base 11c to which the main body 11a is attached, and a cover 11b for closing the opening of the main body 11a. The base 11c has a connection end face 11f that can be connected to the mounting portion of the coating machine main body 3.

As shown in Fig. 1, a coating material bag 12 (partition body) is disposed in the coating material cartridge 11.
The coating material bag 12 is a flexible bag made of a resin and is made deformable.
The coating material bag 12 partitions the inner region of the coating material cartridge 11 into a coating material chamber 13 in which the coating materials is filled and a hydraulic fluid chamber 14 for supplying and discharging a hydraulic fluid for pumping out the coating material from the coating material chamber 13 and is adapted to prevent contact between the coating material and the hydraulic fluid.
Further, since the coating material bag 12 is formed into a bag-shape having an opening at one end, the inside of the coating material bag 12 forms the coating material chamber 13.
In this case, the coating material used in this embodiment is an electroconductive aqueous coating material for electrostatic coating, and the hydraulic fluid used in the embodiment is an insulative transparent oily liquid such as aliphatic hydrocarbons or naphthenic hydrocarbons.
Accordingly, the specific gravity of the transparent oily liquid is from 0.7 to 0.9, which is lower than the specific gravity (1.1 to 1.3) of the aqueous coating material for electrostatic coating.

The coating material bag 12 deforms and shrinks upon filling of the hydraulic fluid in the hydraulic fluid chamber 14.
Correspondingly, the coating material in the coating material 12 (in the coating material chamber 13) is pumped out to the outer region of the coating material cartridge 11.
Further, the coating material bag 12 deforms to expand upon filling of the coating material to the inside (in the coating material chamber 13).
Correspondingly, the hydraulic fluid in the shrunk hydraulic fluid chamber 14 is pumped out to the outer region of the coating material cartridge 11.
In this embodiment, the maximum volume of the coating material chamber 13 is set to about 500 cc and the maximum volume of the hydraulic fluid chamber 14 is set to about 1000 cc.

As shown in Fig. 1, a coating material transfer pipe 16 constituting a coating material transfer path capable of communication between the coating material chamber 13 and the outer region of the coating material cartridge 11 is disposed in the coating material cartridge 11.
Further, a hydraulic fluid transfer pipe 15 constituting a hydraulic fluid transfer path capable of communication between the hydraulic fluid chamber 14 and the outer region of the coating material cartridge 11 is disposed in the coating material cartridge 11.
The top end of the coating material transfer pipe 16 opens in the coating material chamber 13 and the base end of the coating material transfer pipe 16 is connected with a coating material stop valve 11d on the coating material transfer path disposed in the base part 11c.
On the other hand, the top end of the hydraulic fluid transfer pipe 15 opens in the hydraulic fluid chamber 14 and the base end of the hydraulic fluid transfer pipe 15 is connected with a hydraulic fluid stop valve 11e on the hydraulic fluid transfer path disposed in the base part 11c.
The hydraulic fluid stop valve 11e is opened upon attachment to the coating machine 1 to communicate the hydraulic fluid chamber 14 and the outside region of the coating material cartridge 11.
Further, the hydraulic fluid stop valve 11e is closed when not attached to the coating machine 1 to disconnect communication between the hydraulic fluid chamber 14 and the outside region of the hydraulic fluid stop valve 11e.

As shown in Fig. 1, the coating material transfer pipe 16 is in communication with a coating material discharge channel 5 in the coating machine body 3 by way of the coating material stop valve 11d.
The coating material discharge channel 5 is inserted through the tubular rotary shaft 4a and this is a channel for supplying the coating material pumped out from the coating material chamber 13 to the rotary atomizing head 4.
Further, a trigger valve 7 for communication or shutting of the coating material discharge channel 5 is disposed on the coating material discharge channel 5.
On the other hand, the hydraulic fluid transfer pipe 15 is in communication with the hydraulic fluid channel 6 in the coating machine body 3 by way of the hydraulic fluid stop valve 11e.
The hydraulic fluid channel 6 is a channel for supplying a hydraulic fluid by way of a pipeline extending along the arm 2 of a manipulator for coating in the hydraulic fluid chamber 14 of the coating material cartridge 11.
Further, a trigger valve 8 for communication and shutting on the hydraulic fluid channel 6 is disposed on the hydraulic fluid channel 6.
The trigger valves 7, 8 in this embodiment are solenoid valves actuated by not-illustrated solenoids.

A coating material cartridge 11 is adapted to be filled with a coating material in a state attached to a coating material filling system 20 shown in Fig. 2.
The coating material filling system 20 has a coating material filling device 21, a hydraulic fluid storing vessel 27, a hydraulic fluid delivery pipeline 29, a hydraulic fluid return pipeline 28 (hydraulic fluid return path) and a coating material leakage detection device 31, etc.
The coating material filling device 21 is connected by way of the hydraulic fluid delivery pipeline 29 to the hydraulic fluid storing vessel 27.
Further, the coating material filling device 21 is connected by way of the hydraulic fluid return pipeline 28 to the hydraulic fluid storing vessel 27, and the coating material leakage detection device 31 is disposed above the hydraulic fluid storing vessel 27.

A cartridge attaching portion 30 is disposed to the coating material filling device 21, and a coating material cartridge 11 is attached detachably to the upper surface of the cartridge attaching portion 30.
In this state, the hydraulic fluid stop valve 11e is in an open state.

As shown in Fig. 2, a coating material manifold 22 having a plurality of color valves 23 is attached to the lower surface of the cartridge attaching portion 30.
In the coating material manifold 22, a coating material filling path 22a is disposed for introducing a coating material stored in a coating material tank 52 by way of a coating material pump 51 into the coating material chamber 13 upon switching the color valve 23 to an open state.
Further, at the lower surface of the cartridge attaching portion 30, a discharge valve 22b is attached for discharging a coating material or the like upon switching to the open state.
Then, in the cartridge attaching portion 30, a coating material discharge path 22c is disposed for discharging the coating material in the coating material chamber 13 by way of a discharge valve 22b to the outside.
Further, to a connection portion for the hydraulic fluid stop valve 11e, a coating material filling path 22a, and a coating material discharge path 22c, a trigger valve 22d is disposed for shutting one of the hydraulic fluid stop valve 11e, the coating material filling path 22a, and the coating material discharge path 22c and communicating remaining two of them.
The color valve 23, the discharge valve 22b, and the trigger valve 22d in this embodiment are solenoid valves actuated by not-illustrated solenoids.

As shown in Fig. 2, on the hydraulic fluid delivery pipeline 29, a liquid supply valve 24 is disposed for switching the hydraulic fluid delivery pipeline 29 into an open state or a closed state.
The liquid supply valve 24 is attached on the side of the cartridge attaching portion 30. The liquid supply valve 24 is adapted such that the hydraulic fluid can be filled into the hydraulic fluid chamber 14 by way of the hydraulic fluid delivery pipeline 29 and the cartridge attaching portion 30 upon switching to the open state.
The liquid supply valve 24 in this embodiment is a solenoid valve actuated by not-illustrated solenoid.
Further, on the hydraulic fluid delivery pipeline 29, a hydraulic fluid supply pump 26 is disposed. The hydraulic fluid delivery pipeline 29 is a path for supplying the hydraulic fluid stored in the hydraulic fluid storing vessel 27 to the hydraulic fluid chamber 14 by driving of the hydraulic fluid supply pump 26.
The hydraulic fluid supply pump 26 is adapted to supply the hydraulic fluid also to other coating material filling device 21 (the hydraulic fluid chamber 14 in the coating material cartridge 11) and other coating machine 1.

As shown in Fig. 2, on the hydraulic fluid return pipeline 28, a liquid discharge valve 25 is disposed for switching the hydraulic fluid return pipeline 28 into an open state or a closed state.
The liquid discharge valve 25 is attached on the side of the cartridge attaching portion 30.
The liquid discharge valve 25 is adapted such that the hydraulic fluid in the hydraulic fluid chamber 14 can be discharged upon switching to the open state.
The liquid discharge valve 25 in this embodiment is an solenoid valve actuated by a not illustrated solenoid.
The hydraulic fluid return pipeline 28 is a path for returning the hydraulic fluid discharged from the hydraulic fluid chamber 14 by way of the coating material filling device 21 and the hydraulic fluid return pipeline 28 to the hydraulic fluid storing vessel 27.
Since the hydraulic fluid return pipeline 28 is connected also to other coating material filling device 21 or other coating machine 1, the hydraulic fluid discharged from other coating material charging device 21 or other coating machine 1 is also returned to the hydraulic fluid storing vessel 27.

As shown in Fig. 2 and Fig. 3, the coating material leakage detection device 31 is disposed above the hydraulic fluid return pipeline 28, and the coating material leakage detection device 31 is adapted to detect the coating material leakage from the coating material chamber 13 to the hydraulic fluid chamber 14 in the coating material cartridge 11.
The coating material leakage detection device 31 has a bottomed vessel 32 made of a transparent solvent resistant resin and supported by a vessel support 31a.
The bottomed vessel 32 has a volume substantially equal to.the amount of the coating material to be used necessary for the coating of one automobile body (100 to 200cc in this embodiment).
The bottomed vessel 32 comprises a main body portion 32b forming a substantially cylindrical shape, a bottom 32a to which the main body portion 32b is attached and a cover 32c closing the opening of the main body portion 32b.

As shown in Fig. 3, in the bottomed vessel 32, an introduction pipe 36c for introducing the hydraulic fluid passing through the hydraulic fluid return pipeline 28 into the bottomed vessel 32, and a discharge pipe 37 for discharging the hydraulic fluid from the bottomed vessel 32 to the hydraulic fluid return pipeline 28 are provided.
The top end of the introduction pipe 36 opens near the bottom 32a in the bottomed vessel 32 and the top end of the discharge pipe 37 opens near the cover 32c in the bottomed vessel 32.
On the other hand, the base end of the introduction pipe 36 and the base end of the discharge pipe 37 are inserted through the cover 32c and project to the outside of the bottomed vessel 32 and attached by way of a connection screw portion 38 to the hydraulic fluid return pipeline 28 detachably.
Accordingly, the bottomed vessel 32 is detachable relative to the hydraulic fluid return pipeline 28.
Further, the advancing direction of the hydraulic fluid passing through the hydraulic fluid return pipeline 28 changes by 90° at a connection portion (portion where the connection screw 38 is present) with the introduction pipe 36 (or discharge pipe 37).
That is, the bottomed vessel 32 is disposed so as to protrude to a portion different from the flow of the hydraulic fluid return pipeline 28.
Further, the flow speed of the hydraulic fluid greatly lowers when introduced into the bottomed vessel 32.
In this case, since the coating material ingredients contained as obstacles in the hydraulic fluid have a higher specific gravity than that of the hydraulic fluid, they stagnate at the bottom 32a of the bottomed vessel 32.
Then, only the hydraulic fluid separated with the coating material ingredients is discharged from the discharge pipe 37 to the outside of the bottomed vessel 32.

Further, the coating material leakage detection device 31 has a contaminant detection means 33 for detecting the contaminant in the hydraulic fluid attributable to the coating material leakage. The contaminant detection means 33 comprises a light projector 34 and a photodetector 35, and the light projector 34 and the photodetector 35 are opposed to the outer periphery of the bottom 32a while sandwiching the bottomed vessel 32 therebetween. Referring specifically, the light projector 34 is attached to a light projector attaching portion 34a disposed to the vessel support 31a, and the photodetector 35 is attached to a photodetector attaching portion 35a disposed to the vessel support 31a. Since the light projector 34 and the photodetector 35 situate nearer to the bottom 32a than the top end of the introduction pipe 36, the light from the light projector 34 is not hindered by the introduction pipe 36. In this embodiment, since the outer diameter of the bottom 32a is set to about 100 mm, the distance between the light projector 34 and the photodetector 35 (that is, an optical channel length L) is also about 100 mm.
The light projector 34 is adapted to emit a light based on an emission signal outputted from a CPU 62 (refer to Fig. 2) of a personal computer 61.
The photodetector 35 is adapted to receive a light from the light projector 34 passing through the bottomed vessel 32 to measure a received light intensity I.
Then, when the coating material ingredients in the hydraulic fluid stagnate at the bottom 32a of the bottomed vessel 32, since the light from the light projector 34 is inhibited by the stagnating coating material ingredients, the received light intensity I measured by the photodetector 35 is also lowered.
Then, when the received light intensity I is lowered to less than a threshold value, the photodetector 35 detects the contaminant in the hydraulic fluid to output a contaminant detection signal to the CPU 62.

The received light intensity I is determined according to the equation: I = I0*10^{-e}·C·L (Lambert - Beer's Law).
According to the equation, in a case of setting the optical channel length L, for example, to much greater (100 mm in this embodiment) than the outer diameter of the introduction pipe 36 or the discharge pipe 37 (4 to 8 mm in this embodiment), the received light intensity I is not lowered abruptly.
Accordingly, since the received light intensity I does not lower to less than a threshold value by some intrusion of air or obstacles, erroneous detection can be prevented.
Accordingly, the coating material leakage can be detected accurately.
For establishing the relation described above, it is necessary that the received light intensity I in a case where the hydraulic fluid maintains an extremely high transparency and the coating material bag 12 is not broken, and an emission intensity I0 (intensity of light emitted from the light projector 34) are at a substantially identical value.

As shown in Fig. 2, to the downstream of the hydraulic fluid return pipeline 28, the hydraulic fluid storing vessel 27 is disposed for storing the hydraulic fluid.
To the connection portion with the hydraulic fluid return pipeline 28 in the hydraulic fluid storing vessel 27, an obstacle removing device 41 is disposed for removing the coating material ingredients contained as obstacles in the hydraulic fluid by utilizing the difference of the specific gravity.
As shown in Fig. 4, the obstacle removing device 41 comprises a separation chamber 42 disposed to the downstream of the hydraulic fluid return pipeline 28, and a filter 43 disposed to the downstream of the separation chamber 42.
The separation chamber 42 is constituted by alternately disposing walls 44 extending vertically in the separation chamber 42 and walls 46 protruded to the bottom 45 of the separation chamber 42 along the direction of the plane of the bottom 45.
Accordingly, the hydraulic fluid passing through the separation chamber 42 lowers the flow rate while repeating up and down flows alternately along the walls 44, 46.
In this case, since the specific gravity of the coating material ingredients (coarse particles) in the hydraulic fluid is higher than that of the hydraulic fluid, they stagnate at the bottom 45.
Further, the filter 43 is a mesh filter detachably attached in the obstacle removing device 41 and adapted to remove the coating material ingredients (fine particles) in the hydraulic fluid not removed thoroughly upon passage of the hydraulic fluid introduced from the separation chamber 42.
Then, the hydraulic fluid passing through the filter 43 is adapted to drop to the hydraulic fluid storing vessel 27.

Then an electric constitution of the coating material filling system 20 is to be described.

As shown in Fig. 2, the coating material filling system 20 has a personal computer 61, and the personal computer 61 comprises a CPU 62, an ROM 63, an RAM 64, an input/output circuit, etc.
Further, the CPU 62 is electrically connected with a keyboard 65, a display 66, etc.

The CPU 62 is electrically connected with the color valve 23, the discharge valve 22b, the trigger valve 22d, the liquid supply valve 24, and the liquid discharge valve 25, and controls them by various driving signals.
Further, the CPU 62 outputs a light emission signal for causing the light projector 34 to emit a light to the light projector 34.
Further, the CPU 62 displays a character showing the abnormality on the display 66 based on a contaminant detection signal outputted from the photodetector 35.

Then, a method of detecting coating material leakage by using the coating material leakage detection device 31 of the embodiment described above is to be described.

When the coating material in the coating material bag 12 of the coating material cartridge 11 is exhausted, for example, by coating of the coating machine 1, the coating material cartridge 11 is detached from the coating machine 1 and attached to the cartridge attaching portion 30 of the coating material filling device 21.
In this state, when the CPU 62 outputs a driving signal to the color valve 23 and the trigger valve 22d, the color valve 23 is switched to the open state and the trigger valve 22d is driven to turn the coating material stop valve 11d to an open state, by which the coating material filling path 22a and the coating material transfer pipe 16 are in communication with each other.
Thus, the coating material in the coating material tank 52 passes through the coating material filling path 22a, the coating material stop valve 11d, and the coating material transfer pipe 16 by the coating material tank 51, and is filled in the coating material bag 12.

Further, the CPU 62 outputs a driving signal to the color valve 23 and the trigger valve 22d and, at the same time, outputs a driving signal to the liquid discharge valve 25 to switch the liquid discharge valve 25 into an open state.
Accordingly, along with filling of the coating material in the coating material bag 12, the hydraulic fluid in the hydraulic fluid chamber 14 passes by way of the liquid discharge valve 25 through the hydraulic fluid return pipeline 28 and flows into the bottomed vessel 32 of the coating material leakage detection device 31.
Further, the CPU 62 always outputs a light emission signal to the light projector 34 causing the light projector 34 to emit a light.
Thus, the photodetector 35 receives a light from the light projector 34 having passed the bottomed vessel 32 to measure the received light intensity I.

By the way, when the coating material bag 12 is broken, the coating material in the coating material bag 12 is leaked to the hydraulic fluid chamber 14 and mixed with the hydraulic fluid in the hydraulic fluid chamber 14.
Then, the hydraulic fluid flows in a state mixed with the coating material into the bottomed vessel 32 by way of the liquid discharge valve 25 and the hydraulic fluid return pipeline 28.
At this instance, the flow speed of the hydraulic fluid lowers greatly by stagnation in the bottomed vessel 32 and since the specific gravity of the coating material ingredients contained as obstacles in the hydraulic fluid is higher than that of the hydraulic fluid, they stagnate at the bottom 32a of the bottomed vessel 32.
In this case, since the light from the light projector 34 is inhibited by the stagnating coating material ingredients, the received light intensity I measured by the photodetector 35 is also lowered.
Thus, the photodetector 35 detects the contaminant in the hydraulic fluid to output a contaminant detection signal to the CPU 62.
Then, the CPU 62 displays a character that indicates the abnormality on the display 66 based on the inputted contaminant detection signal.

When filling of the coating material into the coating material bag 12 has been completed with no occurrence of the coating material leakage to the hydraulic fluid as described above, the coating material cartridge 11 is detached from the cartridge attaching portion 30 of the coating material filling device 21 and attached to the coating machine 1.
When the coating material cartridge 11 is attached to the coating machine 1, the hydraulic fluid is supplied by another driving source into the hydraulic fluid chamber 14 of the coating material cartridge 11.
Correspondingly, since the coating material bag 12 deforms to shrink, the coating material in the coating material bag 12 is discharged by way of the trigger valve 7 and the tubular rotary shaft 4a from the rotary atomizing head 4 to conduct coating.

Accordingly, the following effects can be obtained by this embodiment.

(1) By the coating material leakage detection device 31 of this embodiment, even when coating material leakage occurs from the coating material chamber 13 to the hydraulic fluid chamber 14 in the coating material cartridge 11, the contaminant detection means 33 detects the contaminant in the hydraulic fluid attributable to the coating material leakage.
Accordingly, contamination of the hydraulic fluid can be found at an early stage.
Further, by the detection of the contaminant in the hydraulic fluid by the contaminant detection means 33, breakage of the coating material bag 12 can be recognized and, in this case, it can be estimated that the hydraulic fluid may possibly be mixed to the coating material.
Accordingly, it is possible to prevent coating of a work by using the coating material mixed with the hydraulic fluid and prevent lowering of the coating quality of the work caused thereby.

(2) In this embodiment, the bottomed vessel 32 of the coating material leakage detection device 31 is attached by way of a connection screw 38 to the hydraulic fluid return pipeline 28 and is made detachable to the hydraulic fluid return pipeline 28.
Further, the filter 43 of the obstacle removing device 41 is attached detachably in the obstacle removing device 41.
Accordingly, upon detection of the contaminant in the hydraulic fluid, when the coating material pump 51 is stopped instantly to stop the flow of the hydraulic fluid, the recovery operation can be completed instantly by merely exchanging the bottomed vessel 32 and the filter 43, and conducting cleaning for the hydraulic fluid return pipeline 28 to the upstream of the hydraulic fluid storing vessel 27.

(3) In this embodiment, since the top end of the introduction pipe 36 in the bottomed vessel 32 opens near the bottom 32a, the hydraulic fluid flows quietly into the bottomed vessel 32.
Thus, since the flow speed of the hydraulic fluid lowers greatly, the coating material ingredients in the hydraulic fluid tend to stagnate easily at the bottom 32a.
Further, since the top end of the discharge pipe 37 in the bottomed vessel 32 opens near the cover 32c, the hydraulic fluid stagnating in the bottomed vessel 32 is less discharged instantly.
Accordingly, it is possible to prevent the hydraulic fluid from being discharged to the outside in a state where the coating material ingredient has not yet stagnated completely.

(4) For example, in a case where the obstacle removing device 41 is constituted only with the filter 43, the filter 43 may possibly remarkably be clogged by the coating material.
On the other hand, in this embodiment, the obstacle removing device 41 comprises the separation chamber 42 and the filter 43 and, among the coating material ingredients only the coarse particles are separated in the separation chamber 42 and then fine particles are separated through the filter 43.
Accordingly, since the possibility that the filter 43 is clogged is lowered, the obstacle removing device 41 can be operated normally.

The embodiment of the present invention may be modified as described below.

The coating material filling system 20 of the embodiment described above has the obstacle removing device 41, and the hydraulic fluid is re-utilized after removing the obstacles by the obstacle removing device 41.
However, in stead of providing the obstacle removing device 41, it may be adapted such that a switching valve 71 is disposed between the coating material leakage detection device 31 in the hydraulic fluid return pipeline 28 and the hydraulic fluid storing vessel 27 and a liquid waste tank 72 may be disposed to the downstream of the switching valve 71 (refer to Fig. 5).
Then, it may be adapted such that upon input of the contaminant detection signal from the photodetector 35, the CPU 62 outputs a driving signal to switch the switching valve 71 to flow the hydraulic fluid mixed with the coating material to the liquid waste tank 72.
That is, it may be adapted such that the hydraulic fluid mixed with the coating material is not introduced to the hydraulic fluid storing vessel 27.

The coating material leakage detection device 31 of the embodiment described above is a tank type device having the bottomed vessel 32 or the like, but it may be an in-line type device as shown in Fig. 6.
For example, a portion of the hydraulic fluid return pipeline 28 may be changed to a cell portion 81 made of transparent glass, and a light projector 34 and a photodetector 35 may be opposed to each other on the outer periphery of the central portion of the cell portion 81 while sandwiching the cell portion 81 therebetween.

However, in a case of using the tank type device shown in the embodiment described above as the coating material leakage detection device 31, since the flow speed of the hydraulic fluid is lowered sufficiently in the bottomed vessel 32, the coating material ingredients in the hydraulic fluid are tend to stagnate easily compared with the case of lowering the flow speed of the hydraulic fluid in the cell portion 81.
Further, the distance between the light projector 34 and the photodetector 35 (optical channel length) is longer compared with a case of adopting the in-line system. Accordingly, also in a case where little contaminant is present in the hydraulic fluid, mixing of the coating material ingredients can be detected more easily. In addition, mixing of the coating material and mixing of air or obstacles can also be distinguished easily.

In the embodiment described above, the specific gravity of the coating material is higher than the specific gravity of the hydraulic fluid and the coating material mixed to the hydraulic fluid stagnates.
Accordingly, the light projector 34 and the photodetector 35 constituting the coating material leakage detection device 31 have been disposed near the bottom 32a of the bottomed vessel 32.
However, in a case where the specific gravity of the coating material is lower than the specific gravity of the hydraulic fluid and the coating material mixed to the hydraulic fluid rises upward, the bottomed vessel 32 may also be disposed being upside down.
With such a constitution, the coating material mixed to the hydraulic fluid can be detected reliably by the light projector 34 and the photodetector 35.

In the embodiment described above, when the received light intensity I lowers to the threshold value or less, the photodetector 35 detects the contaminant in the hydraulic fluid to output the contaminant detection signal to the CPU 62, the contaminant in the hydraulic fluid may be detected by a different method.
For example, it may be adapted such that the photodetector 35 always outputs a signal indicative of the received light intensity I, the CPU 62 judges whether or not the received light intensity I indicated by the inputted signal is at a threshold value or less, and the contaminant in the hydraulic fluid may be detected in a case where it is at the threshold value or less.

The obstacle removing device 41 in the embodiment described above has been constituted with the separation chamber 42 and the filter 43 but it may be constituted only with the filter 43.

Then, in addition to the technical idea described in the scope of the claim for patent, those technical ideas recognized by the embodiments described above are to be set forth below.

(1) A coating material leakage detection device according to claim 3 or 4, wherein the maximum diameter at the bottom of the bottomed vessel is set to 100 mm or more.

(2) A coating material leakage detection device according to claim 3 or 4, wherein the bottomed vessel is made of a material having light permeability, the photodetector receives a light from the light projector having passed the bottomed vessel to measure the received light intensity and detects the contaminant in the hydraulic fluid based on the lowering of the measured received light intensity.

A coating material leakage detection device according to any one of claims 1 to 4, wherein the partition body is a coating material bag filled with the coating material, the volume of the hydraulic fluid chamber is reduced along with the expansion of the coating material bag upon filling the coating material in the coating material bag, the hydraulic fluid in the hydraulic fluid chamber is discharged to the hydraulic fluid return path and, when the hydraulic fluid is filled in the hydraulic fluid chamber, the coating material bag shrinks to pump out the coating material in the coating material chamber.

(4) A coating material leakage detection device according to any one of claims 1 to 4, wherein the coating material cartridge is attached detachably to the coating material leakage detection device or the coating machine, and the coating machine is an electrostatic coating machine for conducting coating in a state of negatively charging the coating material and grounding a work to the earth.

### [Industrial Applicability]

This invention can be applied to the usage of finding contamination of hydraulic fluid at early stage, and preventing degradation of the coating quality of a work, when coating material bag in the hydraulic fluid chamber of the coating material cartridge was broken and the coating material was leaked to the hydraulic fluid chamber.

## Claims

1. A coating material leakage detection device having a coating material chamber (13) and a hydraulic fluid chamber (14) partitioned from each other by way of a deformable or displaceable partition body (12), for detecting coating material leakage from the coating material chamber (13) to the hydraulic fluid chamber (14) in a coating material cartridge (11) mounted detachably to a coating material filling device (21), **characterized by** the provision of
contaminant detection means (31, 33) for detecting a contaminant in the hydraulic fluid caused by coating material leakage.

2. A coating material leakage detection device according to claim 1, wherein the coating material is an aqueous coating material for electrostatic coating, and the hydraulic fluid is an insulative transparent oily liquid having a difference in the specific gravity relative to the coating material.

3. A coating material leakage detection device according to claim 1 or 2, including a bottomed container (32) having a volume larger than the necessary amount of the coating material to be used for coating one work, the contaminant detection means comprising a light projector (34) and a photodetector (35) opposed to each other sandwiching the bottomed container (32) therebetween at the outer periphery of the bottom thereof, an introduction pipe (36) for introducing the hydraulic fluid into the bottomed container, and a discharge pipe (37) for discharging the hydraulic fluid to the outside of the bottomed container.

4. A coating material leakage detection device according to claim 1 or 2, including a bottomed container having a volume larger than the necessary amount of the coating material to be used for coating one work, the contaminant detection means comprising a light projector and a photodetector opposed to each other sandwiching the bottomed container therebetween at the outer periphery of the upper portion thereof, an introduction pipe for introducing the hydraulic fluid into the bottomed container, and a discharge pipe for discharging the hydraulic fluid to the outside of the bottomed container.

5. A coating material filling system **characterized by** providing a coating material filling device (21) having a cartridge attaching portion (30) detachably attached with a coating material cartridge (11) having a coating material chamber (13) and a hydraulic fluid chamber (14) partitioned from each other by way of a deformable or displaceable partition body (12), and having a coating material filling path (22a) disposed for introducing a coating material into the coating material chamber (13) upon attachment of the coating material cartridge (11),
a hydraulic fluid storing vessel (27) for storing the hydraulic fluid,
a hydraulic fluid return path (28) for returning the hydraulic fluid discharged from the hydraulic fluid chamber by way of the coating material filling device to the hydraulic fluid storing vessel, and
a coating material leakage detection device (31) as described in any one of claims 1 to 4 disposed on the hydraulic fluid return path (28).

6. A coating material filling system according to claim 5, further including an obstacle removing device (41) disposed to the downstream of the coating material leakage detection device or the hydraulic fluid storing vessel on the hydraulic fluid return path for removing the coating material ingredients contained as obstacles in the hydraulic fluid by utilizing the difference of the specific gravity.

## Patentansprüche

1. Leckdetektionsvorrichtung für Beschichtungsmaterial, mit einer Beschichtungsmaterialkammer (13) und einer Hydraulikfluidkammer (14), die mittels eines deformierbaren oder verschiebbaren Trennkörpers (12) voneinander abgetrennt sind, zum Erkennen eines Lecks für Beschichtungsmaterial aus der Beschichtungsmaterialkammer (13) in die Hydraulikfluidkammer (14) in einer Kartusche (11) für Beschichtungsmaterial, die abnehmbar an einer Füllvorrichtung (21) für Beschichtungsmaterial montiert ist,
**gekennzeichnet durch** das Bereitstellen einer Kontaminationserkennungseinrichtung (31, 33) zum Erkennen einer Verunreinigung in dem Hydraulikfluid, die durch das Leck für Beschichtungsmaterial verursacht ist.

2. Leckdetektionsvorrichtung für Beschichtungsmaterial nach Anspruch 1, wobei das Beschichtungsmaterial ein wässriges Beschichtungsmaterial für eine elektrostatische Beschichtung ist, und wobei das Hydraulikfluid eine isolierende, transparente, ölige Flüssigkeit mit einer Differenz im spezifischen Gewicht gegenüber dem Beschichtungsmaterial ist.

3. Leckdetektionsvorrichtung für Beschichtungsmaterial nach Anspruch 1 oder 2, wobei diese einen Behälter (32) mit Boden umfasst, dessen Volumen größer ist als das der notwendigen Menge an Beschichtungsmaterial, das für eine Beschichtungsarbeit verwendet werden soll, wobei die Kontaminationserkennungseinrichtung einen Lichtprojektor (34) und einen Photodetektor (35) umfasst, die einander gegenüberliegen, wobei sich der Behälter (32) mit Boden am Außenrand seines Bodens in Zwischenlage zwischen diesen befindet, sowie ein Einlassrohr (36) zum Einführen des Hydraulikfluids in den Behälter mit Boden und ein Ablassrohr (37) zum Ablassen des Hydraulikfluids aus dem Behälter mit Boden nach außen.

4. Leckdetektionsvorrichtung für Beschichtungsmaterial nach Anspruch 1 oder 2, wobei diese einen Behälter mit Boden umfasst, dessen Volumen größer ist als das der notwendigen Menge an Beschichtungsmaterial, das für eine Beschichtungsarbeit verwendet werden soll, wobei die Kontaminationserkennungseinrichtung einen Lichtprojektor und einen Photodetektor umfasst, die einander gegenüberliegen, wobei sich der Behälter mit Boden am Außenrand seines oberen Abschnitts in Zwischenlage zwischen diesen befindet, sowie ein Einlassrohr zum Einführen des Hydraulikfluids in den Behälter mit Boden und ein Ablassrohr zum Ablassen des Hydraulikfluids aus dem Behälter mit Boden nach außen.

5. Füllsystem für Beschichtungsmaterial, **gekennzeichnet durch** Bereitstellen einer Füllvorrichtung (21) für Beschichtungsmaterial, mit einem Kartuschenbefestigungsabschnitt (30), an dem abnehmbar eine Kartusche (11) für Beschichtungsmaterial befestigt ist, die eine Beschichtungsmaterialkammer (13) und eine Hydraulikfluidkammer (14) aufweist, die mittels eines deformierbaren oder verschiebbaren Trennkörpers (12) voneinander abgetrennt sind, und mit einem Füllweg (22a) für Beschichtungsmaterial, welcher derart angeordnet ist, dass beim Anbringen der Kartusche (11) für Beschichtungsmaterial ein Beschichtungsmaterial in die Beschichtungsmaterialkammer (13) eingeführt wird,
einen Vorratsbehälter (27) für Hydraulikfluid, zum Speichern des Hydraulikfluids,
einen Rückführweg (28) für Hydraulikfluid, zum Zurückführen des aus der Hydraulikfluidkammer abgegebenen Hydraulikfluids über die Füllvorrichtung für Beschichtungsmaterial zu dem Vorratsbehälter für Hydraulikfluid, und
eine Leckdetektionsvorrichtung (31) für Beschichtungsmaterial wie in einem der Ansprüche 1 bis 4 beschrieben, die in dem Rückführweg (28) für Hydraulikfluid angeordnet ist.

6. Füllsystem für Beschichtungsmaterial nach Anspruch 5, welches ferner eine Hemmnisentfernungseinrichtung (41) umfasst, die nachgeordnet der Leckdetektionsvorrichtung für Beschichtungsmaterial oder dem Hydraulikfluid-Vorratsbehälter in dem Hydraulikfluid-Rückführweg angeordnet ist, um Inhaltsstoffe des Beschichtungsmaterials, die als Hemmnisse in dem Hydraulikfluid enthalten sind, zu entfernen, und zwar unter Ausnutzung der Differenz im spezifischen Gewicht.

## Revendications

1. Dispositif de détection de fuite pour matériau de revêtement comportant une chambre à matériau de revêtement (13) et une chambre à fluide hydraulique (14) séparées l'une de l'autre par un corps de séparation (12) déformable et déplaçable pour détecter une fuite de matériau de revêtement de la chambre à matériau de revêtement (13) vers la chambre à fluide hydraulique dans une cartouche (11) à matériau de revêtement montée de façon démontable sur un dispositif de remplissage de matériau de revêtement (21),
le dispositif de détection **caractérisé en ce qu'**un moyen de détection de polluant (31, 33) est prévu pour détecter dans le fluide hydraulique un polluant provoqué par la fuite de matériau de revêtement.

2. Dispositif de détection de fuite pour matériau de revêtement selon la revendication 1, dans lequel le matériau de revêtement est un matériau de revêtement aqueux pour le revêtement électrostatique, et le fluide hydraulique est un liquide huileux transparent isolant avec une différence en la gravitation spécifique par rapport au matériau de revêtement.

3. Dispositif de détection de fuite pour matériau de revêtement selon la revendication 1 ou 2, comportant un récipient avec fond (32) à un volume plus grande que la quantité nécessaire de matériau de revêtement à utiliser pour revêtir une pièce à fabriquer, le dispositif de détection de polluant comportant un projecteur de lumière (34) et un photodétecteur (35) opposés l'un à l'autre de façon à recevoir entre eux le récipient avec fond (32), sur la périphérie extérieure de son fond, un tube d'introduction (36) pour introduire le fluide hydraulique dans le récipient avec fond, et un tube d'évacuation (37) pour évacuer le fluide hydraulique vers l'extérieur du récipient avec fond.

4. Dispositif de détection de fuite pour matériau de revêtement selon la revendication 1 ou 2, comportant un récipient avec fond à un volume plus grande que la quantité nécessaire de matériau de revêtement à utiliser pour revêtir une pièce à fabriquer, le dispositif de détection de polluant comportant un projecteur de lumière et un photodétecteur opposés l'un à l'autre de façon à recevoir entre eux le récipient avec fond, sur la périphérie extérieure de sa partie supérieure, un tube d'introduction pour introduire le fluide hydraulique dans le récipient avec fond, et un tube d'évacuation pour évacuer le fluide hydraulique vers l'extérieur du récipient avec fond.

5. Système de remplissage de matériau de revêtement, **caractérisé en ce qu'**il est prévu un dispositif de remplissage de matériau de revêtement (21) comportant une partie de fixation d'une cartouche (30) fixée de façon détachable avec une cartouche à matériau de revêtement (11) comportant une chambre à matériau de revêtement (13) et une chambre à fluide hydraulique (14) séparées l'une de l'autre par un corps de séparation déformable et déplaçable (12) et comportant un chemin de remplissage de matériau de revêtement (22a) arrangé pour introduire dans la chambre à matériau de revêtement (13) un matériau de revêtement après le fixage du cartouche de matériau de revêtement (11), un récipient d'accumulation de fluide hydraulique (27) pour accumuler le fluide hydraulique,
un chemin de retour de fluide hydraulique (28) pour retourner le fluide hydraulique évacué de la chambre à fluide hydraulique par le dispositif de remplissage de matériau de revêtement vers le récipient d'accumulation de fluide hydraulique, et
un dispositif de détection de fuite pour matériau de revêtement (31) comme décrit dans l'une des revendications 1 à 4, disposé sur le chemin de retour de fluide hydraulique (28).

6. Système de remplissage de matériau de revêtement selon la revendication 5, comportant en outre un dispositif d'élimination d'obstacles (41) arrangé an aval du dispositif de détection de fuite pour matériau de revêtement ou du récipient d'accumulation de fluide hydraulique sur le chemin de retour de fluide hydraulique afin d'éliminer des ingrédients de matériau de revêtement contenus comme des obstacles dans le fluide hydraulique, en utilisant la différence en la gravitation spécifique.
